# EUROPEAN PATENT APPLICATION

(11) **EP 2 354 203 A1**
(43) Date of publication of application: **10.08.2011**
(21) Application number: 11152445.0
(22) Date of filing: 28.01.2011
(51) Int. Cl.: C09J 7/02, B32B 27/32, B32B 7/06

(54) **Pressure-sensitive adhesive tape with release liner and method of using the tape**

(30) Priority: 01.02.2010 JP 2010020536
(71) Applicant: NITTO DENKO CORPORATION, Ibaraki-shi, Osaka 567-8680 (JP)
(72) Inventor: Kosaka, Tokuhisa, Ibaraki-shi Osaka 567-8680 (JP); Nonaka, Akiko, Ibaraki-shi Osaka 567-8680 (JP); Inokuchi, Shinji, Ibaraki-shi Osaka 567-8680 (JP)
(74) Representative: Grünecker, Kinkeldey, Stockmair & Schwanhäusser Anwaltssozietät

(57) **Abstract**

A pressure-sensitive adhesive tape that can be used in a temperature environment of at least 90°C or higher, includes: a pressure-sensitive adhesive layer; and a release liner provided on the surface on at least one side of the pressure-sensitive adhesive layer. The release liner has: a base layer containing a polyolefin resin; and a release layer that contains low-density polyethylene and is provided on at least one side of the base layer to be in contact with the pressure-sensitive adhesive layer.

## Description

The present invention relates to a technique regarding a pressure-sensitive adhesive tape.

Pressure-sensitive adhesive tapes (pressure-sensitive adhesive sheets) are generally provided with a sheet material (hereinafter referred to as a release liner) having a release function on the surface of a pressure-sensitive adhesive layer (pressure-sensitive adhesive layer), and can be released between the release liner and the pressure-sensitive adhesive layer. The pressure-sensitive adhesive tapes provided with the aforementioned release liner are used in, for example, attaching exterior parts, such as automobile emblems, etc.

As the release liner used in pressure-sensitive adhesive tapes, the release liner formed by coating and curing a silicone release agent has been conventionally known. In recent years, the release liner made of polyethylene or polypropylene has been known as a release liner in which coating is not needed (for example, Japanese Patent Application Publications Nos. 2000-239624, 2003-127299, and 2005-350650).

In such a pressure-sensitive adhesive tape, in particular, a double-faced pressure-sensitive adhesive tape, the tape is sometimes dried in the process where automotive exterior parts, such as spoiler and bumper, etc. , are coated, in a state where the pressure-sensitive adhesive surface on one side of the tape is attached to an exterior part while a release liner is provided on the pressure-sensitive adhesive surface on the other side of the tape. In the case, the tape is sometimes used in a high-temperature environment of around 100°C. In such a process, if the release liner is popped-off or peeled off from the pressure-sensitive adhesive tape, the exposed adhesive surface will be contaminated.

The present invention has been made in view of these situations, and a purpose of the invention is to provide a pressure-sensitive adhesive tape that can be stably used in a temperature environment higher than room temperature.

In order to solve the aforementioned problem, a pressure-sensitive adhesive tape according to an embodiment of the present invention that can be used in a temperature environment of at least 90°C or higher, comprises: a pressure-sensitive adhesive layer; and a release liner provided on the surface on at least one side of the pressure-sensitive adhesive layer. The release liner has: a base layer containing a polyolefin resin; and a release layer that contains low-density polyethylene and is provided on at least one side of the base layer to be in contact with the pressure-sensitive adhesive layer.

According to the embodiment, it can be suppressed that the release liner may be popped-off or peeled off from the pressure-sensitive adhesive layer in a temperature environment of at least 90°C or higher.

Another embodiment of the present invention is a method of using a pressure-sensitive adhesive tape. In the method, the aforementioned pressure-sensitive adhesive tape is used in a temperature environment of 90°C or higher and in a state where the surface on one side of the pressure-sensitive adhesive layer is attached to an adherend while the release liner is being attached to the surface on the other side of the pressure-sensitive adhesive layer.

Embodiments will now be described, by way of example only, with reference to the accompanying drawing, which are meant to be exemplary, not limiting, in which:
Fig. 1 is a partial sectional view of a pressure-sensitive adhesive according to the present embodiment; and
Fig. 2 is a partial sectional view illustrating the layer structure of a release liner according to the embodiment.

The invention will now be described by reference to the preferred embodiments. This does not intend to limit the scope of the present invention, but to exemplify the invention.

An embodiment for carrying out the present invention will now be described in detail with reference to drawings and a table.

A pressure-sensitive adhesive tape according to the present embodiment is not particularly limited in shape, and may have a sheet shape besides a long shape such as tape. Hereinafter, the tape-shaped pressure-sensitive adhesive tape whose both surfaces are pressure-sensitive adhesive surfaces will be described.

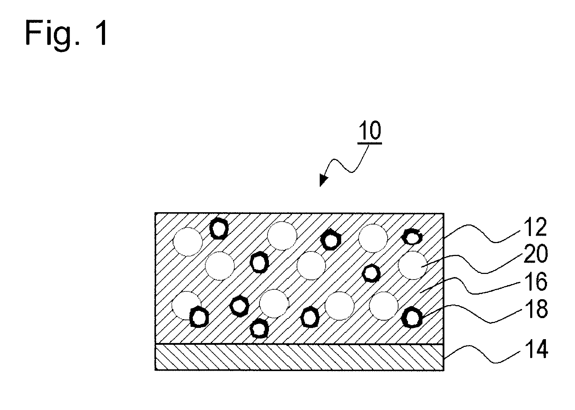

Fig. 1 is a partial sectional view of a pressure-sensitive adhesive tape according to the present embodiment. As illustrated in Fig. 1, apressure-sensitive adhesive tape 10 comprises: a pressure-sensitive adhesive layer 12 functioning as a pressure sensitive adhesive layer; and a release liner 14 provided on the surface on one side of the pressure-sensitive adhesive layer 12. The pressure-sensitive adhesive tape 10 has: a pressure-sensitive adhesive composition 16, hollow inorganic fine particles 18 contained in the pressure-sensitive adhesive composition 16; and bubbles 20 formed inside the pressure-sensitive adhesive composition 16. The pressure-sensitive adhesive tape 10 according to the embodiment is configured to be able to be used in a temperature environment of at least 90°C or higher. The "being able to be used in a temperature environment of at least 90°C or higher" includes, for example: the case where it can be used at temperature from room temperature to 90°C; the case where it can be used in a whole temperature range of 80°C to 110°C; and the case where it cannot be suitably used at 90°C, but can be used at 100°C. That is, it is acceptable as long as the pressure-sensitive adhesive tape can be used at certain temperature in the high-temperature environment to be adopted.

Thepressure-sensitiveadhesivetapeaccordingtothe present embodiment has a "bubble-containing pressure-sensitive adhesive layer/release liner" structure in which the release liner is provided on the surface on at least one side of the pressure-sensitive adhesive layer 12 containing bubbles, not through another layer.

### (Release Liner)

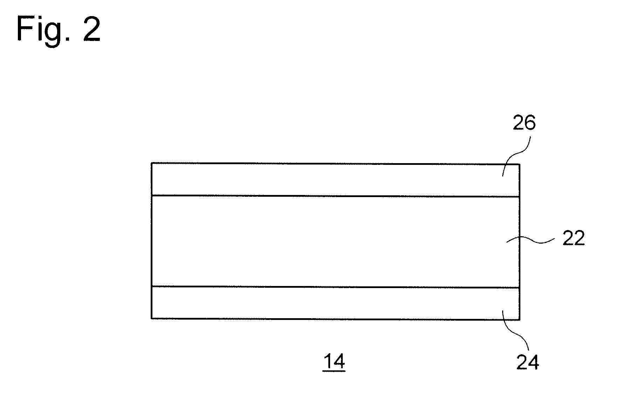

Fig. 2 is a partial sectional view illustrating the layer structure of the release liner according to the present embodiment. The release liner 14 according to the embodiment has: a base layer 22 containing a polyolefin resin; and a release layer 24 that contains low-density polyethylene and is provided on at least one side of the base layer to be in contact with the pressure-sensitive adhesive layer. In other words, the release liner 14 is provided with the base layer 22, and a surface layer that is provided on at least one side of the base layer 22 and functions as the release layer 24 being in contact with the pressure-sensitive adhesive layer, thus the release liner 14 having a layer structure formed of at least two layers. The surface layer may be provided directly on the surface of the base layer, or be laminated through another layer, such as a pressure-sensitive adhesive layer, etc. Alternatively, the release liner 14 may have a configuration of three layers or more, as long as the release layer 24 (release layer 26) is provided on at least one side of the base layer 22, as illustrated in Fig. 2.

### (Surface Layer)

It is preferable that the surface layer of the release liner according to the present embodiment, the surface layer being located on the side where the release liner is in contact with the pressure-sensitive adhesive layer, is configured such that low-density polyethylene and an olefin elastomer are major components of the surface layer. The total amount of the low-density polyethylene and the olefin elastomer is preferably 60 mass% or more, and more preferably 90 mass% or more, based on the total mass of the surface layer. With such a polymer configuration, the release property of the release liner can be improved.

The "low-density polyethylene (LDPE)" in the present embodiment means the polyethylene whose density is 900 (kg/m³) or more and less than 930 (kg/m³) according to JIS K 6922-2. Examples of the "low-density polyethylene" in the embodiment include so-called "low-density polyethylene" that is obtained by polymerizing an ethylene monomer with a high-pressure method and that has a long-chain branch, a "very low-density " polyethylene, and a "linear low-density polyethylene (LLDPE)" that is obtained by polymerizing ethylene and an α-olefin monomer having three to eight carbon atoms (the length of a short-chain branch is preferably that of one to six carbon atoms). Among them, the linear low-density polyethylene (LLDPE) is particularly preferred as the low-density polyethylene used in the surface layer of the release liner according to the embodiment, in terms of easy control of the properties, such as release property, due to the copolymerization of an α-olefin. In the aforementioned LLDPE, 1-hexene or 1-octene is preferred as the comonomer component used along with ethylene.

The aforementioned olefin elastomer is not particular limited, as long as it is a copolymer including an α-olefin and it is a compound showing elastomer characteristics. Examples thereof include, for example, an ethylene-α-olefin copolymer, propylene-α-olefin copolymer, ethylene-propylene-diene copolymer, ethylene-vinyl acetate copolymer, polybutene, polyisobutylene, and chlorinated polyethylene, etc.

Among the aforementioned olefin elastomers, an ethylene-α-olefin copolymer elastomer is particularly preferred in terms of release property and compatibility. In the present embodiment, it is assumed that the ethylene-α-olefin copolymer whose density is less than 900 (kg/m³) (for example, 860 (kg/m³) or more and less than 900 (kg/m³)) according to JIS K 6922-2 is included in an olefin elastomer. The α-olefin component of an ethylene-α-olefin copolymer elastomer is not particularly limited, but α-olefins having about three to ten carbon atoms, such as propylene and butene, etc. At least one α-olefin (comonomer) selected from the group consisting of propylene, butene-1, hexene-1, 4-methyl pentene-1, and octane-1 can be used.

As the aforementioned low density polyethylene and olefin elastomer, marketed products are also available. As the low density polyethylene, for example, "MORETEC 0628D and 0218CN" made by Prime Polymer Co. Ltd., etc., can be cited. As the olefin elastomer, "TAFMER-P" (ethylene-propylene copolymer) made by MITSUI CHEMICALS, INC. , etc. , is cited. Among them, "TAFMER-P PO180 and PO280 are preferably used, also in terms of film formability.

The aforementioned low density polyethylene and olefin elastomer can be used alone or in combination of two or more of them, respectively.

The content of the olefin elastomer in the surface layer of the release liner according to the present embodiment is preferably 10 to 200 mass parts, more preferably 25 to 100 mass parts, still more preferably 50 to 75 mass parts, based on 100 mass parts of the low density polyethylene. The release force can be improved by adding the olefin elastomer. On the other hand, with an increase in the addition amount thereof, the processability is sometimes decreased or blocking is sometimes likely to occur, because the surface layer becomes flexible. When the content of the olefin elastomer is less than ten mass parts, the release property is sometimes insufficient, and when the content thereof is more than 200 mass parts, the processability and the blocking resistance are sometimes decreased.

Besides the aforementioned low density polyethylene and olefin elastomer, various additives including colorant (pigment, dye), filler, lubricant, anti-aging agent, antioxidant, ultraviolet absorber, flame retardant, and stabilizer, etc., may be blended in the surface layer of the release liner according to the present embodiment, within a range in which the effects of the present invention are not impaired.

In the case where the release liner according to the present invention has a three-layer structure in which the surface layers are formed on both the faces of the base layer, the surface layers on both sides are composed of different polymers or different blend composition, respectively; however, it is desirable that the surface layers are composed of the same polymer and the same composition in terms of preventing curl of the release liner.

### (Base Layer)

The base layer in the release liner according to the present embodiment is composed of a polyolefin resin, which is a major component. The content of the polyolefin resin is preferably 50 mass% or more, and more preferably 80 mass% or more, based on the total mass of the base layer. Because a polyolefin resin is relatively flexible in comparison with a polyester resin, such as polyethylene terephthalate, the following property of the release liner to the deformation of an adherend is improved by using a polyolefin resin in the base layer of the release liner, thereby it can be suppressed that the release liner may be popped-off or peeled off during its storage or use in high-temperature environment. The release liner in which a polyester resin is used in the base layer cannot follow the minimal deformation of an automobile emblem that is made of a resin when, for example, the release liner is stored in the state of being attached to the emblem, and thereby productivity is sometimes decreased due to lifting (pop-off) or peel-off of the release liner.

As the aforementioned polyolefin resin, polypropylene (PP) or high-density polyethylene (HDPE) is preferred in terms of keeping the strength of the release liner and improving the processability. That is, it is preferable that the base layer in the release liner according to the present embodiment contains polypropylene (PP) and/or high-density polyethylene (HDPE) in an amount of 50 mass% or more based on the total mass of the base layer, and it is more preferable that the base layer contains in an amount of 80 mass% or more. Among them, random polypropylene is preferred because a transparent or translucent resin is preferred in the applications in which the visibility on the facing side is required when, for example, processed. The "high-density polyethylene (HDPE) in the present embodiment means the polyethylene whose density is 930 (kg/m³) or more (preferably 942 to 960 (kg/m³)) according to JIS K 6922-2.

As the aforementioned olefin resin, marketed products are also available. Examples of them include, for example: "Noblen WF836DG3 and FS3611" made by Sumitomo Chemicals Co., Ltd., "Novatec PP EG6D" made by Japan Polypropylene Corporation, (above are PP), "HI-ZEX 3300F" made by Prime Polymer Co. Ltd., and "Nipolon Hard 4050" made by Tosoh Corporation, (above are HDPE), etc.

Colorant, such as pigment, may be added into the base layer in the release liner according to the present embodiment in terms of distinguishability of part numbers and improvement of handling property by coloring. As the pigment, publicly-known and commonly-used organic and inorganic pigment can be used in accordance with the desired color type. For example, carbon black, iron oxide, titanium oxide, titan yellow, cobalt blue, cadmium red, azo lake series pigment (red, yellow), phthalocyanine series pigment, quinacridone series pigment, etc. are cited.

An antistatic agent may be added into the base layer in the release liner according to the present embodiment in terms of improvement of workability and prevention of destruction of the release layer. As the antistatic agent, publicly-known and commonly-used nonionic antistatic agents, anionic antistatic agents, and cationic antistatic agents can be used.

Besides the aforementioned resin components, colorant, and antistatic agents, various additives including filler, lubricant, anti-aging agent, antioxidant, ultraviolet absorber, flame retardant, and stabilizer, etc., may be added into the base layer in the release liner according to the present embodiment, in an amount within a range in which the effects of the invention are not impaired.

The thickness of each of the surface layers in the release liner according to the present embodiment is 15 µmor less, and preferably 10 µm or less. Because the surface layer according to the embodiment includes an olefin elastomer, the layer is flexible. Accordingly, with an increase in the thickness of the surface layer, the strength and stiffness of the whole liner are decreased and there is the tendency that the "cut property" of the liner becomes decreased because the surface expands when being cut. That is, when the thickness of the surface layer exceeds 15 µm, the punching property thereof is decreased, and thereby processing defect, such as "remain", "burr", or the like, is likely to occur when processed. The minimum of the thickness of the layer is not particularly limited, but when the surface layer is provided by co-extrusion, the thickness thereof is preferably 5 µm or more in terms of uniform laminating by the co-extrusion. When the surface layer is provided by coating, the thickness thereof is preferably within a range of approximately 0.1 to 5 µm.

In the case of a three-layer structure in which the surface layers are formed on both the faces of the base layer, the ratio of the thickness of the surface layers on both sides (the thickness of the surface layer having a larger thickness to that having a smaller thickness) is preferably tree or less, and more preferably two or less. When the ratio of the thickness f the surface layers on both sides exceeds three, curl sometimes occur in the release liner.

The thickness of the base layer in the release liner according to the present embodiment is preferably within a range of 40 to 190 µm, and more preferably within a range of 90 to 170 µm. The base layer assumes the role of bearing the strength of the release liner. When the thickness of the base layer is less than 40 µm, the strength and stiffness of the release liner are decreased, and thereby the punching property and handling property of the release liner are sometimes decreased. On the other hand, when the thickness thereof exceeds 200 µm, the stiffness of the release liner becomes strong, and thereby the release liner sometimes cannot follow the emblem having a curved surface, and thereby lifting or peel-off sometimes occurs.

The thickness (total thickness) of the release liner according to the present embodiment is preferably within a range of 50 to 200 µm, and more preferably within a range of 100 to 180 µm.

The ratio of the thickness of the base layer to the total thickness of surface layers on both sides (base layer/surface layer) in the release liner according to the present embodiment, is within a range of 4 to 19, and preferably within a range of 6 to 10. When the ratio thereof is below the aforementioned range (i.e., the base layer is thin), the strength and stiffness of the release liner are decreased, and thereby the punching property and handling property are decreased. On the other hand, when the ratio thereof exceeds the aforementioned range (i.e., the surface layer is thin), it becomes particularly difficult to uniformly laminate them by co-extrusion.

The Young's modulus of the release liner according to the present embodiment is preferably within a range of 150 to 700 MPa, and more preferably within a range of 200 to 500 MPa, in terms of punching property.

The release liner according to the present embodiment can be manufactured by the publicly-known and commonly-used sheet formation method, such as melt film-forming method (T-die method, inflation method), solution film-forming method, or the like. Also, the lamination method of the release liner according to the embodiment is not particularly limited, and publicly-known and commonly-used methods, such as co-extrusion method, dry lamination method, and wet lamination method, etc., can be used. Among them, a co-extrusion method is preferred in terms of productivity.

It is preferable that a mat treatment is performed on the surface layer of the release liner according to the present embodiment. It is preferable because the edge release property with respect to the pressure-sensitive adhesive surface and the blocking-preventing property are improved by performing a mat treatment on the surface. Examples of the aforementioned mat treatment include, for example, a method in which the surface of a support substrate is ground with a buff or sandpaper, a sandblast treatment inwhichpowder-particles, such as glass beads, Carborundum, or metal particles, are strongly sprayed on the surface of a substrate along with compressed air to create fine scratches thereon, an emboss treatment with an emboss roll, and a chemical mat treatment by a chemical treatment, etc.

The arithmetic average roughness (Ra) of the surface of the release liner according to the present embodiment, the surface being located on the side where the release liner is in contact with the pressure-sensitive adhesive layer, is related with the later-described thickness of the pressure-sensitive adhesive layer; however, it is preferable that Ra is within a range of approximately 0.4 to 5.0 µm. In particular, when the thickness of the pressure-sensitive adhesive layer is within a range of 200 to 1200 µm, Ra is preferably within a range of 0.4 to 2.0 µm and more preferably within a range of 0.45 to 1.2 µm.

The arithmetic average roughness (Ra) of the surface of the aforementioned release liner, the surface being located on the side where the release liner is in contact with the pressure-sensitive adhesive layer, have an influence on the edge release property of the release liner. The "edge release property" in the present embodiment means the release property at the edge portion of the release liner, occurring when the release liner is released from the pressure-sensitive adhesive sheet in a state where the release liner is provided on the pressure-sensitive adhesive surface on one side of the double-faced pressure-sensitive adhesive sheet while the adhesive surface on the other side thereof is being attached to an adherend (for example, a resin molded article, such as automotive emblem, etc.) The aforementioned edge portion means the "trigger" portion where release of the release liner is initiated. The edge portion also includes the portion where the width of the section where a product and the release liner is in contact with each other is rapidly widened, and the portion where the release direction is rapidly changed due to the curve of an adherend. If the edge release property is poor, it is difficult to release, for example, a so-called "trigger" portion when the release liner is to be released from an adherend, and thereby the productivity is remarkably decreased. In addition, when the release liner is to be released from an adherend having a complicated shape, such as a part having a section where the width of the part is rapidly narrowed in the middle thereof, the release stress is rapidly increased during the release, and accordingly a burden is imposed on the adherend to sometimes cause a damage of the adherend.

The aforementioned edge release property is greatly influenced by the contact state between the pressure-sensitive adhesive layer and the release liner in the release interface section between the two (the boundary section where the release is just progressing) When the aforementioned surface roughness is large, i.e., when the surface of the release liner is rough, the stress is likely to concentrate on a narrow area in the release interface, and thereby the edge release property is improved.

On the other hand, when the surface of the release liner is too rough, the pressure-sensitive adhesive layer permeates between the concavities and convexities of the surface of the release liner while the pressure-sensitive adhesive layer are being in contact with the release liner (during storage, etc.), because the pressure-sensitive adhesive layer is flexible. Thereby, the contact area is increased and the release force is changed over time, and thereby the stability in the release property is sometimes decreased. The aforementioned permeation becomes remarkable as the thickness of the pressure-sensitive adhesive layer is larger.

The arithmetic average roughness (Ra) of the surface of the release liner according to the present embodiment, the surface being located on the opposite side to the side where the release liner is in contact with the pressure-sensitive adhesive layer (back surface), is related with the later-described thickness of the pressure-sensitive adhesive layer; however, it is preferable that Ra is within a range of approximately 0.4 to 5.0 µm. In particular, when the thickness of the pressure-sensitive adhesive layer is within a range of 200 to 1200 µm, Ra is preferably within a range of 1.0 to 5.0 µm and more preferably within a range of 1.3 to 2.0 µm. In addition, it is preferable that the arithmetic average roughness (Ra) of the aforementioned back surface is larger than that of the surface on the side where release liner is in contact with the pressure-sensitive adhesive layer.

When the surface roughness on the back surface side is less than the aforementioned range, the rewinding property is sometimes decreased, on the other hand, when it is more than the aforementioned range, the stability over time in the release force is sometimes decreased similarly with the case of the surface roughness on the side where the release liner is in contact with the pressure-sensitive adhesive layer.

### (Pressure-Sensitive Adhesive Layer)

The pressure-sensitive adhesive tape according to the present embodiment is not particularly limited, but it is preferable that the tape has at least a pressure-sensitive adhesive layer containing bubbles. The pressure-sensitive adhesive tape may have an adhesive surface only on one side thereof or have adhesive surfaces on both sides thereof, in accordance with applications. In addition, the pressure-sensitive adhesive tape may be an adhesive tape including a substrate that has a pressure-sensitive adhesive layer on either or each of both the sides thereof, or a pressure-sensitive adhesive tape of a substrate-less type formed only of a pressure-sensitive adhesive layer (containing bubbles). Among them, a double-faced pressure-sensitive adhesive tape of a substrate-less type formed only of a bubble-containing pressure-sensitive adhesive layer is preferred in the applications for attaching automotive exterior parts, such as spoiler, etc., in terms of shape-following property and adhesion reliability.

### (Bubble-Containing Pressure-Sensitive Adhesive Layer)

The bubble-containing pressure-sensitive adhesive layer in the aforementioned pressure-sensitive adhesive tape is configured such that an adhesive (pressure-sensitive adhesive) and a bubble-structure are essential components. As the aforementioned "bubble-structure", a structure may be adopted as long as it has a gas component, and the "bubble" formed only of a gas component and not having an outer shell may be adopted, or the "hollow microspheres" in which a gas component is enclosed in an outer shell, such as a microbubble in glass, may be adopted. Hereinafter, a composition forming the aforementioned bubble-containing pressure-sensitive adhesive layer (for example, a composition prior to a curing reaction) is simply referred to as a "pressure-sensitive adhesive composition".

As the pressure-sensitive adhesive for forming the aforementioned bubble-containing pressure-sensitive adhesive layer, for example, a rubber adhesive, acrylic adhesive, vinyl alkyl ether adhesive, silicone adhesive, polyester adhesive, polyamide adhesive, urethane adhesive, fluorine adhesive, styrene-diene block copolymer adhesive, and epoxy, etc., can be used alone or in combination of two or more of them. A light-curable adhesive (ultraviolet-curable adhesive, etc.) is also available as the pressure-sensitive adhesive.

In the present invention, an acrylic adhesive is particularly preferred as the pressure-sensitive adhesive. An acrylic pressure-sensitive adhesive usually contains, as the base polymer, an acrylic polymer whose monomer major component is (meth)acrylic acid ester, such as (meth)acrylic acid alkyl ester, etc.

Examples of (meth)acrylic acid alkyl ester include, for example: (meth)acrylic acid C₁₋₂₀ alkyl esters [preferably (meth) acrylic acid C₂₋₁₄ alkyl esters, and more preferably (meth) acrylic acid C₂₋₁₀ alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth) acrylic acid octyl, (meth) acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, and (meth)acrylic acid tetradecyl, etc.

Examples of (meth)acrylic acid esters other than (meth)acrylic acid alkyl esters include, for example: (meth)acrylic acid esters having an alicyclic hydrocarbon group, such as cyclopentyl (meta) acrylate, cyclohexyl (meta) acrylate, and isobornyl (meta) acrylate, etc.; and (meth)acrylic acid esters having an aromatic hydrocarbon group, such as phenyl (meta) acrylate, etc.

Such (meth)acrylic acid esters can be used alone or in combination of two or more thereof. The ratio of the (meth)acrylic acid ester [in particular, (meth)acrylic acid alkyl ester] in an acrylic polymer is, for example, 60 mass% or more, and preferably 80 mass% or more, based on the total mass of the monomer components for preparing an acrylic pressure-sensitive adhesive.

Various copolymerizable monomers, such as polar group-containing monomers and polyfunctional monomers, etc., may be used as the monomer components in the acrylic polymers. Adhesive force can be improved or cohesive force can be enhanced, by using a copolymerizable monomer as the monomer component. The copolymerizable monomers can be used alone or in combination of two or more thereof.

Examples of the aforementioned polar group-containing monomers include, for example: carboxyl group-containing monomers, such as (meth)acrylic acid, itaconic acid, maleic acid, fumaric acid, crotonic acid, and isocrotonic acid, or anhydrides thereof (maleic anhydride, etc.); hydroxylgroup-containingmonomers, such as (meth)acrylic acid hydroxyalkyls including (meth)acrylic acid hydroxyethyl, (meth)acrylic acid hydroxypropyl, and (meth)acrylic acid hydroxybutyl, etc.; amide group-containing monomers, such as acrylamide, methacrylamide, N,N-dimethyl(meth)acrylamide, N-methylol(meth)acrylamide, N-methoxymethyl(meth)acrylamide, and N-butoxymethyl(meth)acrylamide, etc.; amino group-containing monomers, such as (meth)acrylic acid aminoethyl, (meth)acrylic acid dimethylaminoethyl, and (meth)acrylic acid t-butylaminoethyl, etc.; glycidyl group-containing monomers, such as (meth)acrylic acid glycidyl and (meth)acrylic acid methylglycidyl, etc.; cyano group-containing monomers, such as acrylonitrile and methacrylonitrile, etc.; and heterocycle-containing vinyl monomers, such as N-viny pyridine, N-vinylpiperidone, N-vinylpyrimidine, N-vinylpiperazine, N-vinylpyrazine, N-vinylpyrrole, N-vinylimidazole, and N-vinyloxazole, etc., as well as N-vinyl-2-pyrrolidone and (meth) acryloyl morpholine. As the polar group-containing monomers, carboxyl group-containing monomers, such as acrylic acid, etc., or anhydrides thereof are preferred.

The use amount of the polar group-containing monomer is 30 mass% or less (for example, 1 to 30 mass%) based on the total mass of the monomer components for preparing an acrylic pressure-sensitive adhesive (acrylic polymer), and is preferably 3 to 20 mass%. If the use amount of the polar group-containing monomer exceeds 30 mass%, the cohesive force of the acrylic adhesive becomes too high, and accordingly there is the fear that the pressure-sensitive adhesiveness of the adhesive may be decreased. On the other hand, if the use amount thereof is too small, the cohesive force of the acrylic adhesive is decreased, and accordingly there is the fear that high shear force may not be obtained.

Examples of the aforementioned polyfunctional monomers include, for example: hexanediol di (meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc.

The use amount of the polyfunctional monomer is two mass% or less (for example, 0.01 to 2 mass%) based on the total mass of the monomer components for preparing the acrylic adhesive, and is preferably 0.02 to 1 mass%. If the use amount of the polyfunctional monomer exceeds two mass%, the cohesive force of the acrylic adhesive becomes too high, and accordingly there is the fear that the adhesiveness may be decreased. On the other hand, if the use amount of the polyfunctional monomer is too small, there is the fear that the cohesive force of the acrylic adhesive may be decreased.

Examples of the copolymerizable monomers other than the polar group-containing monomers or polyfunctional monomers include: for example: vinyl esters, such as vinyl acetate and vinyl propionate, etc.; aromatic vinyl compounds, such as styrene and vinyl toluene, etc.; olefins or dienes, such as ethylene, butadiene, isoprene and isobutylene, etc.; vinyl ethers, such as vinyl alkyl ether, etc.; vinyl chloride; (meth)acrylic acid alkoxy alkyl monomers, such as (meth)acrylic acid methoxyethyl, (meth)acrylic acid ethoxyethyl, etc.; sulfonate group-containing monomers, such as vinyl sulfonate sodium, etc.; phosphate group-containing monomers, such as 2-hydroxyethyl acryloyl phosphate, etc.; imide group-containing monomers, such as cyclohexyl maleimide and isopropyl maleimide, etc.; isocyanate group-containing monomers, such as 2-methacryloyloxyethyl isocyanate, etc.; fluorine atom-containing (meth)acrylate; and silicon atom-containing (meth)acrylate, etc.

The content of the aforementioned pressure-sensitive adhesive (for example, acrylic polymer) in the bubble-containing pressure-sensitive adhesive layer is preferably 50 mass% or more based on the total mass of the pressure-sensitive adhesive layer.

It is preferable that the bubbles used in the bubble-containing pressure-sensitive adhesive layer are basically closed-cell bubbles; however, closed-cell bubbles and interconnected-cell bubbles may be present together.

The aforementioned bubbles usually have a sphere shape (in particular, true sphere shape), but may have a distorted sphere shape. The average bubble diameter of the bubbles is not particularly limited, but can be selected from a range of 1 to 1000 µm (preferably from a range of 10 to 500 µm, and more preferably from a range of 30 to 300 µm).

The gas component included in the bubbles (sometimes referred to as a "bubble-forming gas") is not particularly limited, and various gas components, such as air, etc., can be used, as well as inert gases, such as nitrogen, carbon dioxide, and argon, etc. In the case where a reaction, such as polymerization reaction, etc., is conducted in a state where a bubble-forming gas is included, a gas that does not hamper the reaction is selected as the bubble-forming gas. As the bubble-forming gas, nitrogen is preferred in terms of not hampering the reaction and a low cost.

The amount of the bubbles in the bubble-containing pressure-sensitive adhesive layer is not particularly limited, and appropriately selected in accordance with its application. For example, it may be made that the amount of the bubbles is ten capacity% (volume%) or more (preferably eleven capacity% or more, and more preferably twelve capacity% or more), based on the total volume of the bubble-containing pressure-sensitive adhesive layer. The maximum amount of the bubbles in the bubble-containing pressure-sensitive adhesive layer is not particularly limited, but it may be made that the maximum amount thereof is 50 capacity% (preferably 40 capacity%, and more preferably 30 capacity%).

A form in which the bubbles in the bubble-containing pressure-sensitive adhesive layer are formed is not particularly limited. Either of the bubble-containing pressure-sensitive adhesive layer that is formed by using a pressure-sensitive adhesive composition into which a bubble-forming gas has been mixed beforehand and that formed by using a pressure-sensitive adhesive composition containing a foaming agent, may be used as the bubble-containing pressure-sensitive adhesive layer. The amount of the bubbles in a bubble-containing pressure-sensitive adhesion composition can be appropriately selected from the range corresponding to the amount of the bubbles in the bubble-containing pressure-sensitive adhesive layer.

A surfactant may be contained in the bubble-containing pressure-sensitive adhesive layer as an auxiliary agent when the bubbles are mixed. As the surfactant, for example, a fluorine-containing surfactant, silicone surfactant, nonionic surfactant, and ionic surfactant, etc. can be used. Among them, a fluorine-containing surfactant is particularly preferred in terms of excellent bubble mixing property and suppression of the integration of the bubbles.

As the fluorine-containing surfactant, a fluorine-containing surfactant containing a fluorine-based polymer whose mass average molecular weight is greater than or equal to 20,000 is preferred. The mass average molecular weight of the fluorine-based polymer is preferably within a range of 20,000 to 100,000 (more preferably 22,000 to 80,000, and still more preferably 24,000 to 60,000). If the mass average molecular weight of the fluorine-based polymer is less than 20,000, the bubble-mixing property and the stability of the mixed bubbles are decreased, and accordingly the amount of the bubbles that can be mixed is decreased. Even if the bubbles are mixed, the integration of the bubbles is likely to progress during the formation of the bubble-containing pressure-sensitive adhesive layer after the bubbles have been mixed. As a result, the bubble amount in the bubble-containing pressure-sensitive adhesive layer is likely to be decreased or the bubbles (holes) penetrating throughthebubble-containingpressure-sensitiveadhesive layer are likely to be formed. The aforementioned fluorine-based polymers can be used alone or in a combination of two or more thereof.

Such a fluorine-based polymer contains at least the monomer having a fluorine atom-containing group (sometimes referred to as a "fluorine-based monomer") as a monomer component. The fluorine-based monomers can be used alone or in combination of two or more thereof.

Specifically, as the fluorine-containing surfactant, products with the name of "F Top EF-352" and "F Top FE-801" (made by Jemco Inc.), a product with the name of "Unidyne TG-656" (made by Daikin Industries, Ltd.), and the like, can be used.

The use amount (solid content) of the fluorine-containing surfactant is not particularly limited, but can be selected from a range of, for example, 0.01 to 2 mass parts (preferably 0.03 to 1.5 mass parts, and more preferably 0.05 to 1 mass parts), based on 100 mass parts of the whole monomer components for forming the base polymer in the pressure-sensitive adhesive composition (in particular, the whole monomer components for forming an acrylic polymer whose monomer major component is (meth)acrylic acid ester). If the use amount of the fluorine-containing surfactant is less than 0.01 mass parts, the bubble mixing property is decreased, and accordingly it becomes difficult to mix a sufficient amount of bubbles into the bubble-containing pressure-sensitive adhesive composition. On the other hand, if the use amount thereof exceeds 2 mass parts, the pressure-sensitive adhesive performance is likely to de decreased.

When the bubble-containing pressure-sensitive adhesive layer is formed by using a pressure-sensitive adhesive composition having a foaming agent, the foaming agent is not particularly limited, and can be appropriately selected from the publicly-known foaming agents. For example, thermal expandable microspheres spheres can be used as the foaming agent.

Examples of the hollow microspheres used in the bubble-containing pressure-sensitive adhesive layer include inorganic and organic hollow microspheres. Specifically, examples of the hollow inorganic microspheres include, for example: glass hollow balloons, such as hollow glass balloons, etc.; metallic compound hollow balloons, such as hollow alumina balloons, etc.; and porcelain hollow balloons, such as hollow ceramic balloons, etc. Examples of the hollow organic microspheres include, for example: resin hollow balloons, such as hollow acrylic balloons and hollow vinylidene chloride balloons, etc. Inaddition, various surface treatments (for example, a low surface tension treatment with a silicone compound, fluorine compound, or the like) may be performed on the surface of the hollow microspheres.

The particle size (average particle size) of the hollow microspheres is not particularly limited, but can be selected from a range of, for example, 1 to 500 µm (preferably 5 to 200 µm, and more preferably 10 to 100 µm).

The specific gravity of the hollow microspheres is not particularly limited, but can be selected from a range of, for example, 0.1 to 0.8 g/cm³ (preferably 0.12 to 0.5 g/cm³). If the specific gravity of the hollow microspheres is less than 0.1 g/cm³, the elevation of the hollow microspheres becomes large when the hollow microspheres are blended and mixed into the pressure-sensitive adhesive that forms the bubble-containing pressure-sensitive adhesive layer, and accordingly it becomes difficult to uniformly disperse the hollow microspheres. On the other hand, if the specific gravity thereof is greater than 0.8 g/cm³, the hollow microspheres become expensive, and accordingly the production cost is increased.

The use amount of the hollow microspheres is not particularly limited, but can be selected from a range of, for example, 10 to 50 capacity% (volume%), and preferably from a range of 15 to 40 capacity%, based on the total volume ofthebubble-containingpressure-sensitiveadhesivelayer. If the use amount of the hollow microspheres is less than 10 capacity% based on the total volume of the bubble-containing pressure-sensitive adhesive layer, the effects by the addition of the hollowmicrospheres are likely to be decreased. On the other hand, if the use amount thereof exceeds 50 capacity%, the adhesive force of the bubble-containing pressure-sensitive adhesive layer is likely to be decreased.

When a curing reaction by heat or an active energy ray is to be used in preparing the bubble-containing pressure-sensitive adhesive layer, it is preferable that a polymerization initiator, such as a thermal polymerization initiator, photo-polymerization initiator, or the like, is contained in the pressure-sensitive adhesive composition. A bubble-containing pressure-sensitive adhesive layer having a structure in which bubbles are stably contained can be easily formed by curing the pressure-sensitive adhesive composition with heat or an energy ray in the state where the bubbles are mixed. As the polymerization initiator, a photo-polymerization initiator can be preferably used in terms of the advantage that a polymerization period of time can be shortened, etc. The polymerization initiators can be used alone or in combination of two or more thereof.

Examples of the aforementioned photo-polymerization initiator are not particularly limited, but include, for example, a benzoin ether photo-polymerization initiator, acetophenone photo-polymerization initiator, α-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, and thioxanthone photo-polymerization initiator, etc.

The use amount of the photo-polymerization initiator is not particularly limited, but can be selected from a range of, for example, 0.01 to 5 mass parts (preferably 0.05 to 3 mass parts) based on 100 mass parts of the whole monomer components for preparing the pressure-sensitive adhesive.

It is important to irradiate the pressure-sensitive adhesive composition with an active energy ray in activating the photo-polymerization initiator. Examples of such an active energy ray include, for example: ionizing radiation, such as an α-ray, β-ray, γ-ray, neutron ray, electron beam, or the like; and an ultraviolet ray. Among them, an ultraviolet ray is particularly preferred. The radiation energy, radiation period, and radiation method, etc., of the active energy ray are not particularly limited, and only required to generate reactions of the monomer components by activating the photo-polymerization initiator.

Examples of the aforementioned thermal polymerization initiator include, for example, an azo polymerization initiator, peroxide polymerization initiator, redox polymerization initiator, etc. The use amount of the thermal polymerization initiator is not particularly limited, and only required to be within the range available as a thermal polymerization initiator. An appropriate additive may be contained in the bubble-containing pressure-sensitive adhesive layer (or the pressure-sensitive adhesive component) in accordance with the application of the pressure-sensitive adhesive sheet. Examples of such an additive include, for example: a cross-linking agent (for example, a polyisocyanate cross-linking agent, silicone cross-linking agent, epoxy cross-linking agent, alkyl-etherified melamine cross-linking agent, or the like); a tackifier (for example, a solid, a semisolid, or a liquid substance at normal temperature consisting of a rosin derivative resin, polyterpene resin, petroleum resin, and oil-soluble phenol resin, etc.); a plasticizer; filler; an antiaging agent; an antioxidant; and colorant (pigment, dye, etc.), etc.

For example, when the bubble-containing pressure-sensitive adhesive layer is to be formed by using the photo-polymerization initiator, pigment (coloring pigment) can be used in an amount at which a photo-polymerization reaction is not hampered in order to color the bubble-containing pressure-sensitive adhesive layer. When black is required as the color of the bubble-containing pressure-sensitive adhesive layer, carbon black can be used as color pigment. It is preferable that the use amount of the carbon black is selected from a range of, for example, 0.15 mass parts or less (for example, 0.001 to 0.15 mass parts), and preferably a range of 0.02 to 0.1 mass parts, based on 100 mass parts of the whole monomer components for forming the base polymer in the pressure-sensitive adhesive that forms the bubble-containing pressure-sensitive adhesive layer (in particular, the whole monomer components for forming an acrylic polymer whose monomer major component is (meth) acrylic acid ester), in terms of the degree of coloring and not hampering the aforementioned photo-polymerization reaction.

The bubble-containing pressure-sensitive adhesive layer may have either form of a single layer and a laminated layer. The thickness of the bubble-containing pressure-sensitive adhesive layer is not particularly limited, but preferably with in a range of 0.2 to 2 mm. Of the range, the thickness thereof is preferably within a range of 0.2 to 1.2 mm, and more preferably within a range of 0.4 to 1.2 mm for an automotive emblem application. If the thickness of the bubble-containing pressure-sensitive adhesive layer is less than 0.2 mm, the cushion property thereof is decreased, and accordingly the adhesiveness to a curved surface or a concave-convex surface is decreased. On the other hand, if the thickness thereof exceeds 2 mm, it becomes difficult to obtain a layer having a uniform thickness.

The foam expansion ratio (%) of the bubble-containing pressure-sensitive adhesive layer is preferably, for example, 10% or more, more preferably 11% or more, and still more preferably 12% or more. The maximum of the foam expansion ratio is not particularly limited, but preferably, for example, 50% or less, and more preferably 40% or less, and still more preferably 30% or less. The form expansion ratioofthebubble-containingpressure-sensitiveadhesive layer is determined by the following equation.

Foaming expansion ratio of the bubble-containing pressure-sensitive adhesive layer (%) = (1-B/A) x 100 (where A is the specific gravity of the pressure-sensitive adhesive layer not containing bubbles (bubble-not-containing pressure-sensitive adhesive layer), which is obtained by curing a pressure-sensitive adhesive into which bubbles have not been mixed; and B is the specific gravity of the bubble-containing pressure-sensitive adhesive layer, which is obtained by curing a pressure-sensitive adhesive into which the bubbles are mixed. The pressure-sensitive adhesive compositions with respect to A and B have the same composition as each other, except that the presence/absence of bubbles.)

The pressure-sensitive adhesive composition that forms the bubble-containing pressure-sensitive adhesive layer can be prepared by mixing the monomer components for forming the base polymer (for example, alkyl (meth) acrylate etc.), and if necessary, the hollow microspheres, the polymerization initiator, and various additives by using a publicly-known method. In addition, the monomer components may be partially polymerized, if viscosity adjustment is needed. Specifically, the pressure-sensitive adhesive composition can be prepared in the following procedures: (i) monomer components for forming the base polymer (forexample, alkyl (meth) acrylate and other copolymerizable monomers) and a polymerization initiator (for example, a photo-polymerization initiator) are mixed together to prepare a monomer mixture; (ii) a polymerization reaction of the monomer mixture is carried out in accordance with the type of the polymerization initiator (for example, an ultraviolet polymerization) to prepare a composition (syrup) in which part of the monomer component is only polymerized; and subsequently, (iii) the hollow micrpspheres, the fluorine-containing surfactant, and other additives are blended into the obtained syrup, if necessary. When bubbles are further contained, (iv) bubbles are introduced into and mixed with the blend obtained in (iii). Thereby, the pressure-sensitive adhesive composition can be obtained. A method of preparing the pressure-sensitive adhesive composition is not limited thereto, but a preparation method in which, for example, the fluorine-containing surfactant and the hollow microspheres are beforehand blended into the monomer mixture in preparing the syrup, may be adopted.

When bubbles are to be contained in the bubble-containing pressure-sensitive adhesive layer, it is preferable that the bubbles are blended and mixed into the pressure-sensitive adhesive composition as the last component, for example, as in the aforementioned preparation method, in terms of stable mixture and presence of the bubbles. Also, it is preferable that the viscosity of the blend prior to the mixture of the bubbles (for example, the blend obtained in the aforementioned (iii)) is increased in terms of the stable mixture of the bubbles. The viscosity of the blend prior to the mixture of the bubbles is not particularly limited, but preferably within a range of, for example, 5 to 50 Pa•s (which is measured by using a BH viscometer (rotor: No. 5, the number of rotations: 10 rpm, measurement temperature: 30°C), and more preferably within a range of 10 to 40 Pa•s. If the viscosity is less than 5 Pa•s, the blended bubbles are integrated soon due to the too low viscosity, and accordingly the bubbles sometimes come out of the system. On the other hand, if the viscosity exceeds 50 Pa•s, it sometimes becomes difficulttoformthebubble-containingpressure-sensitive adhesive layer by coating due to too high viscosity. The aforementioned viscosity can be adjusted by, for example, a method of blending various polymer components, such as acrylic rubber and thickening additive, etc., a method of partially polymerizing the monomer components for forming the base polymer, and the like.

A method of mixing bubbles is not particularly limited in the aforementioned preparation method, but a publicly-known bubble mixing method can be used. Examples of an apparatus include, for example: an apparatus provided with: a stator having many fine teeth placed on a disk with a through-hole at its center; and a rotor that faces the stator with the teeth and that has, on a disk, teeth as fine as those of the stator, and the like. The blend into which bubbles are to be mixed is introduced between the teeth on the stator and that on the rotor in the apparatus, and while rotating the rotor at high speed, a gas component for forming bubbles (bubble-forming gas) is introduced through the through-hole. Thereby, a resin composition can be obtained in which the bubble-forming gas is finely scattered and mixed.

In order to suppress or prevent the integration of the bubbles, it is preferable to continuously perform the processes of the mixture of the bubbles through the formation of the bubble-containing pressure-sensitive adhesive layer as a series of processes.

The bubble-containing pressure-sensitive adhesive layer can be formed by a publicly-known or commonly-used method. Examples of the method include, for example: a method in which the pressure-sensitive adhesive composition is coated on the release liner to form the pressure-sensitive adhesive composition layer, and the layer is cured (for example, cured by heat or an active energy ray) or dried, if necessary; and the like. Among them, the curing by radiation of an active energy ray is preferred as stated above. In addition, when the pressure-sensitive adhesive sheet has a support substrate, a release liner may be attached when the pressure-sensitive adhesive layer is formed by coating the pressure-sensitive adhesive composition on the support substrate and cured the composition.

When the pressure-sensitive adhesive sheet used in the present embodiment has a support substrate other than the bubble-containing pressure-sensitive adhesive layer, a publicly-known and commonly-used support substrate can be used in the pressure-sensitive adhesive sheet. As the support substrate, appropriate thin-leaf bodies can be used. Examples of such thin-leaf bodies include, for example: paper substrates, such as paper, etc.; fiber substrates, such as cloth, nonwoven fabric, and net, etc.; metal substrates, such as metallic foil and metal plate, etc.; plastic substrates, such as plastic film and sheet, etc.; rubber substrates, such as rubber sheet, etc.; foams, such as foam sheet, etc.; and laminated bodies thereof (in particular, laminated bodies formed of plastic substrates and other substrates and those formed of both plastic films (or sheets)), etc. Examples of the materials of the plastic films and sheets include, for example: olefin resins whose monomer component is an α-olefin, such as polyethylene (PE), polypropylene (PP), ethylene-propylene copolymer, and ethylene-vinyl acetate copolymer (EVA), etc; polyester resins, such as polyethylene terephthalate (PET), polyethylene naphthalate (PEN), polybutylene terephthalate (PBT), etc.;polyvinylchloride (PVC); vinyl acetate resin; polyphenylene sulfide (PPS); polyamide (nylon); amide resins, such wholly aromatic polyamide (aramid), etc.; polyimide resin; and polyether ether ketone (PEEK), etc. These materials can be used alone or in combination of two or more thereof.

As the aforementioned bubble-containing pressure-sensitive adhesive tape, marketed products can also be used. For example, "HYPER JOINTs A3008, A4002, A4004, A4006, A4008, and A4012" (substrate-less double-faced pressure-sensitive adhesive tape) made by NITTO DENKO CORPORATION, etc., can be used.

Thepressure-sensitiveadhesivetapeaccordingtothe present embodiment may have, for example, a structure in which the release liner is provided on the adhesive surface of the pressure-sensitive adhesive layer having the adhesive surface only on the surface on one side thereof, or a structure in which the release liners are provided on both sides of the pressure-sensitive adhesive layer having the adhesive surfaces on both faces thereof. Alternatively, the pressure-sensitive adhesive tape according to the embodiment may have a structure in which the release liner is provided on the surface on one side of the pressure-sensitive adhesive layer having the adhesive surfaces on both faces thereof. In this case, the pressure-sensitive adhesive tape may have a structure in which the surface (back surface) on the other side of the release liner is in contact with the adhesive surface on the side where the liner in the pressure-sensitive tape is not provided by being wound (or by the sheets being stacked).

In addition, the release liner according to the present embodiment may have a sheet-shaped form, tape-shaped form, or the like. Alternatively, the release liner may have a form wound in a roll shape.

In the pressure-sensitive adhesive tape according to the present embodiment, the lifting or peel-off of the release liner does not occur even when stored in a curved state, and excellent release function can be demonstrated when used. Further, in the pressure-sensitive adhesive tape according to the embodiment, it can be suppressed that the release liner may be popped-off or peeled off from the pressure-sensitive adhesive layer in a temperature environment of at least 90°C or higher.

### (Method of Measuring Physical Properties and Method of Evaluating Effects)

### (1) Evaluation of Lifting of Release Liner

The pressure-sensitive adhesive tape is first cut off into a predetermined size to be attached to an aluminum plate having a thickness of 0.5 mm (a support plate without thermal deformation). Subsequently, the aluminum plate to which the pressure-sensitive adhesive tape has been attached is left uncontrolled in an environment of predetermined temperature for a predetermined period of time. Thereafter, it is observed whether the release liner is popped-off from the pressure-sensitive adhesive layer. It is determined whether the lifting occurs by, for example, whether a gap is generated between the release liner and the pressure-sensitive adhesive layer.

### (2) Release Force of Release Liner

Strip evaluation samples of the pressure-sensitive adhesive tape, the strip sample having a size of 25 mm in width x 150 mm in length, were first produced. It is noted that the longitudinal direction of the samples is the flow (MD) direction of the pressure-sensitive adhesive sheet. The polyester film subjected to a silicone treatment was released from the aforementioned sample to be attached to a polyester film having a thickness of 50 µm ("Lumirror S-101" made by TORAY INDUSTRIES, INC.). Subsequently, the face on the aforementioned polyester film side was attached and fixed to a plate-shaped body (SUS 304 BA plate, 50 mm x 150 mm) supporting the stiffness of the polyester film.

The 180° release test was conducted by using a universal testing machine ("TG-1kNB" made by Minebea Co., Ltd.). The resistance of the sample was measured by pulling the release liner side of the sample, and the maximum value was assumed to be the release force after each of the top 10% and bottom 10% of the measured date was cut. The aforementioned measurements were conducted with respect to each of: (i) the samples at normal temperature; (ii) the samples at 90°C; (iii) the samples at 100°C; (iv) the samples at 110°C; and (v) the samples at normal temperature after having been left uncontrolled at 100°C for 30 minutes and then cooled for 24 hours. Specifically, the measurements were conducted at tension speed (cross-head speed) of 300 mm/min under each environment, according to JIS Z 0237. The tests were conducted three times (average) for each sample. Examples

Hereinafter, the present embodiment will be described in detail based on Examples, but the present invention should not be limited by these Examples. It is noted that, in the following Examples and Table 1, the surface layer of the release sheet on the side to be attached to the pressure-sensitive adhesive tape is referred to as the "surface layer (pressure-sensitive adhesive layer side)", and the surface layer opposite thereto is referred to as the "surface layer (back surface side)".

### (Example 1)

### (Release Liner)

As the material for the surface layer (pressure-sensitive adhesive layer side), a low-density polyethylene resin (which is made by JAPAN POLYETHYLENE CORPORATION, with the product name of "Novatec LD UF641", the density of which is 927 kg/m³: represented by LDPE 1 in the Table) was used. As the material for the base layer and the surface layer (back surface side), a mixture resin formed of a high-density polyethylene resin (which is made by Prime Polymer Co., Ltd., with the product name of "HI-ZEX 3300F", the density of which is 950 kg/m³: represented by HDPE in the Table), a low-density polyethylene resin (which is made by JAPAN POLYETHYLENE CORPORATION, with the product name of "Novatec LD LF440HB", the density of which is 925 kg/m³: represented by LDPE 2 in the Table), and pigment, was used (in which the mixed mass ratio of the aforementioned high-density polyethylene to the low-density polyethylene was 60/40).

The release liner (thickness: 149 µm) formed of a three-layer configuration of the surface layer (pressure-sensitive adhesive layer side)/the base layer/the surface layer (back surface side) (thickness: 21 µm /64 µm /64 µm), was produced by the three-layer co-extrusion T-die molding method, with a pearskin-finished roll made of rubber being used as a touch roll for the pressure-sensitive adhesive layer side and with a pearskin-finished roll made of metal being used as a touch roll for the back surface side.

### (Bubble-Containing Pressure-sensitive adhesive Layer)

The pressure-sensitive adhesive layer (bubble-containing pressure-sensitive adhesive layer) with the product name of "HYPER JOINT A4008", which had been made by NITTO DENKO CORPORATION, was attached to the surface on the pressure-sensitive adhesive layer side of the aforementioned release liner. Further, a polyester film subjected to a silicone treatment was attached to the surface of the aforementioned bubble-containing pressure-sensitive adhesive layer, the surface being opposite to the surface where the release liner was provided. Thereby, a pressure-sensitive adhesive tape provided with the release liner was produced.

### (Example 2)

### (Release Liner)

As the material for the surface layers (pressure-sensitive adhesive layer side, back surface side), a mixed material was used in which 100 mass parts of a linear low-density polyethylene resin (which has been made by Prime Polymer Co., Ltd., with the product name of "MORETEC 0628D", the density of which is 916 kg/m³: represented by LLDPE 1 in the Table) and 50 mass parts of an ethylene-propylene copolymerization elastomer (which has been made by Mitsui Chemicals, Inc. , with the product name of "TAFMER P0280", the density of which is 870 kg/m³: represented by elastomer in the Table). As the material for the base layer, 100 mass parts of a polypropylene resin (made by Sumitomo Chemical Co. , Ltd. , with the product name of "NOBLEN FS3611", the density of which 890 kg/m³: represented by PP in the Table) and pigment were used.

The release liner (thickness: 150 µm) formed of a three-layer configuration of the surface layer (pressure-sensitive adhesive layer side)/the base layer/the surface layer (back surface side) (thickness: 8 µm /134 µm /8 µm), was produced by the three-layer co-extrusion T-die molding method, with a pearskin-finished roll made of rubber being used as a touch roll for the pressure-sensitive adhesive layer side and with a pearskin-finished roll made of metal being used as a touch roll for the back surface side.

### (Bubble-Containing Pressure-sensitive adhesive Layer)

The pressure-sensitive adhesive layer (bubble-containing pressure-sensitive adhesive layer) with the product name of "HYPER JOINT A4008", which had been made by NITTO DENKO CORPORATION, was attached to the surface on the pressure-sensitive adhesive layer side of the aforementioned release liner. Further, a polyester film subjected to a silicone treatment was attached to the surface of the aforementioned bubble-containing pressure-sensitive adhesive layer, the surface being opposite to the surface where the release liner was provided. Thereby, a pressure-sensitive adhesive tape provided with the release liner was produced.

### (Comparative Example 1)

As the material for the surface layers (pressure-sensitive adhesive layer side, back surface side), a mixed material of polyethylene, ester, and inorganic particulates was used. As the material for the base layer, a mixed material of polyethylene and pigment was used. With suchmaterials, a release liner (thickness: 150 µm) formed of a three-layer configuration of the surface layer (pressure-sensitive adhesive layer side)/the base layer/the surface layer (back surface side) was produced. Subsequently, a pressure-sensitive adhesive layer provided with the release liner was produced by attaching an acrylic pressure-sensitive adhesive layer to the surface on the pressure-sensitive adhesive layer side of the release liner.

The pressure-sensitive adhesive layers in Examples and Comparative Example were evaluated with each of the aforementioned evaluation methods. The results thereof are shown in Table 1.

**[Table 1]**

| | | | EXAMPLE 1 | EXAMPLE 2 | COMPARATIVE EXAMPLE 1 |
|---|---|---|---|---|---|
| RELEASE LINER | SURFACE LAYER (ADHESIVE LAYER SIDE) | OLEFIN RESIN | LDPE 1 | LLDPE 1 | POLYETHYLENE + ESTER + INORGANIC PARTICULATES |
| | | ELASIOMER | - | ADDITION | - |
| | | MIXED RATIO (RESIN/ELASTOMER; | 100/0 | 100/50 | - |
| | BASE LAYER | RESIN | HDPE/LDPE2 | PP | POLYETHYLENE PIGMENT |
| | SURFACE LAYER (BACK SURFACE SIDE) | OLEFIN RESIN | HDPE/LDPE2 | HDPE1 | POLYETHYLENE ESTER+INORGANIC PARTICULATES |
| | | ELASTOMER | - | ADDITION | - |
| | | MIXED RATIO (RESIN/ELASTOMER; | 100/0 | 100/50 | - |
| | LAYER THICKNESS: µm | SURFACE LAYER (ADHESIVE LAYER SIDE) | 21 | 8 | - |
| | | CENTRAL LAYER | 64 | 134 | - |
| | | SURFACE LAYER (BACK SURFACE SIDE) | 64 | 8 | - |
| | TOTAL THICKNESS: µm | | 149 | 150 | 140 |
| ADHESIVE LAYER | PRESSURE-SENSITIVE ADHESIVE COMPOSITION | | ACRYLIC | ACRYLICA | ACRYLIC |
| EVALUATION RESULTS | EVALUATION OF LIFTING OF LINER | TAPE SIZE 15mm×25mm (90-95°C 30min) | - | O | × |
| | | TAPE SIZE 125mm×75mm (100°C 30min) | O | - | × |
| | RELEASE FORCE OF LINER [N/25mm] | NORMAL TEMPERATURE | 243 | 0.58 | 2.10 |
| | | LEFT UNCONTROLLED AT 100°C FOR 30min THEN COOLED AT NORMAL TEMPERATURE FOR 24 HOURS | 2.72 | 0.67 | 0.66 |
| | RELEASE FORCE OF LINER AT EACH TEMPERATURE [N/25mm] | 90°C | 0.32 | 0.12 | 0.08 |
| | | 100°C | 0.29 | 0.14 | 0.07 |
| | | 110°C | 0.06 | 0.11 | 0.05 |

In evaluating the lifting of the release liner, presence/absence of the lifting was visually determined after the pressure-sensitive adhesive tape according to Example 1, which had been cut into a size of 25 mm x 70 mm, was left uncontrolled in an environment of 100°C for 30 minutes. As a result, in the pressure-sensitive adhesive tape according to Example 1, no lifting occurred (described as o in Table 1), and accordingly the tape can be stably used in an environment higher than room temperature. Similarly, presence/absence of the lifting in the pressure-sensitive adhesive tape according to Example 2 was visually determined after the tape that had been cut into a size of 15 mm x 200 mm was left uncontrolled in each environment of 90°C and 95°C for 30 minutes. As a result, in the pressure-sensitive adhesive tape according to Example 2, no lifting occurred in each environment of 90°C and 95°C (described as o in Table 1), and accordingly the tape can be stably used in an environment higher than room temperature. On the other hand, in the pressure-sensitive adhesive tape according to Comparative Example 1, lifting occurred in each environment of 90°C to 100°C, regardless of the aforementioned tape sizes (described as x in Table 1).

Thus, each of the pressure-sensitive adhesive tapes according to Examples 1 and 2 is configured such that the release liner is not popped-off from the pressure-sensitive adhesive layer in an environment of at least 90°C. Accordingly, it becomes possible to use such a pressure-sensitive adhesive tape in the coating process that is a high-temperature environment, in a state where the pressure-sensitive adhesive layer is attached to an automotive exterior part, such as spoiler, bumper, or the like, and in a state where the release liner is not released. That is, because it is difficult that the release liner may be popped-off in an high-temperature environment in such a pressure-sensitive adhesive tape, it can be suppressed that paint or dust may be mixed into the space between the release liner and the pressure-sensitive adhesive layer. And accordingly, it can be suppressed that the adhesiveness may be decreased due to the contamination of the pressure-sensitive adhesive layer.

Subsequently, the release force of the release liner in each of the pressure-sensitive adhesive tapes according to Examples and Comparative Example that are at normal temperature after exposed to a high-temperature environment, will be examined. In each of the pressure-sensitive adhesive tapes according to Examples 1 and 2 that have been left uncontrolled in an environment of 100°C for 30 minutes and then cooled at normal temperature for 24 hours, the release force, occurring when the release liner is released from the pressure-sensitive adhesive layer in the aforementioned measuring method, is greater than or equal to the release force occurring when the release liner is released, in the aforementioned measuring method, from the pressure-sensitive adhesive layer in the pressure-sensitive adhesive tape that has been left uncontrolled at normal temperature. That is, in the pressure-sensitive adhesive tape according to Example, the release force of the release liner is not greatly decreased even when used in a high-temperature environment, and accordingly the desired pressure-sensitive adhesive performance can be maintained even in the process after exposed to high temperature.

On the other hand, in the pressure-sensitive adhesive tape according to Comparative Example 1 that has been left uncontrolled in an environment of 100°C for 30 minutes and then cooled at normal temperature for 24 hours, the release force, occurring when the release liner is released from the pressure-sensitive adhesive layer in the aforementioned measuring method, is approximately 0.3 times the release force occurring when the release liner is released, in the aforementioned measuring method, from the pressure-sensitive adhesive layer in the pressure-sensitive adhesive tape that has been left uncontrolled at normal temperature. And accordingly, the pressure-sensitive adhesive tape according to Comparative Example 1 is not suitable for the use in a high-temperature environment, as shown from the fact that lifting has occurred in the aforementioned evaluation of lifting of release liner.

Accordingly, in the pressure-sensitive adhesive tape according to the present embodiment that has been left uncontrolled in an environment of 100°C for 30 minutes and then cooled at normal temperature for 24 hours, it is acceptable that the release force occurring when the release liner is released from the pressure-sensitive adhesive layer at tension speed of 300 mm/min in the 180° release direction is 0.33 times or more, and preferably 0.5 times or more (the maximum thereof is 2.0 times or less, and preferably 1.5 times or less) the release force occurring when the release liner is released, at tension speed of 300 mm/min in the 180° release direction, from the pressure-sensitive adhesive layer in the pressure-sensitive adhesive tape that has been left uncontrolled at normal temperature. With such a pressure-sensitive adhesive tape, an adhesion failure accompanying a decrease in the release force can be suppressed.

Subsequently, the release force of the release sheet in each of the pressure-sensitive adhesive tapes according to Examples and Comparative Example that are at a high-temperature environment, will be examined. In the pressure-sensitive adhesive tape according to Example 1, the release force occurring when the release liner is released, in the aforementioned measuring method, from the pressure-sensitiveadhesivelayerinanenvironmentofeach of 90°C and 100°C, is greater than or equal to 0.29 [N/25 mm]. In the pressure-sensitive adhesive tape according to Example 2, the release force occurring when the release liner is released, in the aforementioned measuring method, from the pressure-sensitive adhesive layer in an environment of each of 90°C, 100°C, and 110°C, is greater than or equal to 0.11 [N/25 mm]. That is, it becomes difficult that the release liner in the pressure-sensitive adhesive tape according to each Example may be released from the pressure-sensitive adhesive layer.

On the other hand, in the pressure-sensitive adhesive tape according to Comparative Example 1, the release force occurring when the release liner is released, in the aforementioned measuring method, from the pressure-sensitiveadhesivelayerinanenvironmentofeach of 90°C, 100°C, and 110°C, is smaller than 0.10 [N/25 mm]. Accordingly, the release liner in the pressure-sensitive adhesive tape according to Comparative Example 1 is likely to be released from the pressure-sensitive adhesive layer, and thereby the tape is not suitable for the use in a high-temperature environment.

Accordingly, in the pressure-sensitive adhesive tape according to the present embodiment, it is acceptable that the release force occurring when the release liner is released, at tension speed of 300 mm/min in the 180° release direction, from the pressure-sensitive adhesive layer in an environment of 90°C, is 0.10 [N/25 mm] or more, and preferably 0.20 [N/25 mm] or more (the maximum thereof is 2.0 [N/25 mm] or less). With such a pressure-sensitive adhesive tape, it is less likely that the release liner may be released from the pressure-sensitive adhesive layer in a high-temperature environment.

As stated above, according to the pressure-sensitive adhesive tape of the present embodiment and Examples, lifting is not generated even when the tape is used in an environment of 90°C or higher, even in a state where the surface on one side of the pressure-sensitive adhesive layer is attached to an adherend while the release liner is being attached to the surface on the other side thereof, and therefore it can be prevented that the adhesive surface of the pressure-sensitive adhesive layer may be contaminated. As a result, the pressure-sensitive adhesive performance of the pressure-sensitive adhesive tape is stably demonstrated even when the tape is used in a manner of being exposed to an environment of temperature higher than room temperature.

The present invention has been described above based on the embodiments and examples. The embodiments are described for exemplary purposes only, and it can be readily understood by those skilled in the art that various modifications may be made by making various combinations of the aforementioned components or processes, which are also encompassed in the scope of the present invention.

## Claims

1. A pressure-sensitive adhesive tape that can be used in a temperature environment of at least 90°C or higher, the pressure-sensitive adhesive tape comprising:
a pressure-sensitive adhesive layer; and
a release liner provided on the surface on at least one side of the pressure-sensitive adhesive layer, wherein
the release liner has:
a base layer containing a polyolefin resin; and
a release layer that contains low-density polyethylene and is provided on at least one side of the base layer to be in contact with the pressure-sensitive adhesive layer.

2. The pressure-sensitive adhesive tape according to claim 1, wherein
when the pressure-sensitive adhesive tape has been left uncontrolled in an environment of 100°C for 30 minutes and then cooled at normal temperature for 24 hours, the release force occurring when the release liner is released from the pressure-sensitive adhesive layer at tension speed of 300 mm/min in the 180° release direction is 0.5 times or more the release force occurring when the release liner is released, at tension speed of 300 mm/min in the 180° release direction, from the pressure-sensitive adhesive layer in the pressure-sensitive adhesive tape that has been left uncontrolled at normal temperature.

3. The pressure-sensitive adhesive tape according to claim 1 or claim 2, wherein
the release force occurring when the release liner is released, in an environment of 90°C, from the pressure-sensitive adhesive layer at tension speed of 300 mm/min in the 180° release direction is greater than or equal to 0.10 [N/25 mm].

4. The pressure-sensitive adhesive tape according to any one of claims 1 to 3, wherein
the release layer further comprises an olefin elastomer, and wherein the olefin elastomer is an ethylene-α-olefin copolymer whose density is less than 900 (kg/m³).

5. The pressure-sensitive adhesive tape according to any one of claims 1 to 4, wherein
the polyolefin resin contains polypropylene orhigh-density polyethylene.

6. The pressure-sensitive adhesive tape according to any one of claims 1 to 5, wherein
the pressure-sensitive adhesive layer contains an acrylic polymer whose monomer major component is (meth) acrylic acid alkyl ester.

7. The pressure-sensitive adhesive tape according to any one of claims 1 to 6 that is used in a coating process in a state where the pressure-sensitive adhesive layer is attached to an automotive exterior part while the release liner is being attached.

8. The pressure-sensitive adhesive tape according to any one of claims 1 to 7, wherein
the release liner is not popped-off from the pressure-sensitive adhesive layer in a temperature environment of at least 90°C.

9. A method of using a pressure-sensitive adhesive tape,
wherein
the pressure-sensitive adhesive tape of any one of claims 1 to 8 is used in a temperature environment of 90°C or higher and in a state where the surface on one side of the pressure-sensitive adhesive layer is attached to an adherend while the release liner is being attached to the surface on the other side of the pressure-sensitive adhesive layer.
